# EUROPEAN PATENT APPLICATION

(11) **EP 1 422 046 A1**
(43) Date of publication of application: **26.05.2004**
(21) Application number: 02025916.4
(22) Date of filing: 20.11.2002
(51) Int. Cl.: B29C 65/54, F16B 3/00, B60K 15/03

(54) **Component assembly and method for connecting components**

(71) Applicant: Delphi Technologies, Inc., Troy, MI 48007 (US)
(72) Inventor: Samotik, Stanislaw, 8029 Strassen (LU); Hamowski, Piotr, 30-619 Krakow (PL)
(74) Representative: Beissel, Jean

(57) **Abstract**

Component assembly comprising a first component (12) having a first connection face (16) with a first connection profile (18) and a second component (14) having a second connection face (20) with a second connection profile (22). According to an important aspect of the invention, the first and second connection profiles (18, 22) are designed so as to form a chamber (24, 50) between the first and second connection faces (16, 20) when the connection faces (16, 20) are in contact with each other. Setting material is arranged in the chamber (24, 50), the setting material being able to set into a solid element within the chamber (24, 50).

## Description

### FIELD OF THE INVENTION

The present invention generally relates to a component assembly and to a method for connecting components.

### BACKGROUND OF THE INVENTION

Friction welding or vibrational welding is often used to connect two components together. The connection face of one of the components is tightly pressed and rubbed against the connection face of the other component. As the connection faces rub against one another, a tight connection between the two components is formed. Generally both connection faces must be configured with high precision so that they can properly cooperate to form a strong connection between the two components. The necessity for the high precision of the connection faces entails the necessity for expensive high precision tooling equipment.

Such welding techniques can e.g. be used in the automobile industry, wherein plastic fuel canisters are closed by a plastic lid. The container and lid assembly must provide a secure and sealed connection in order e.g. not to allow air/fuel vapour to escape from the canister. Generally, the plastic lid is connected to a plastic container by vibrational welding, wherein the container and lid are configured such that there is a tight fit between them when assembled. The connection faces of the lid are tightly pressed against the connection faces of the container. The connection faces of both components generally have to be formed with great precision. If there is a slight alteration to the profile, the strength of the connection is compromised. Such precision forming of connection faces is particularly expensive and time consuming.

As the connection faces rub against one another, a tight connection is formed. However, the rubbing of the connection faces against one another also allows for small plastic particles of the lid or container to come loose and to fall into the container. This contamination of the canister with plastic particles is of course not desired and should be avoided. In order to avoid such contamination, additional grooves can be formed in one of the connection faces to receive the loosened particles therein. Although this might avoid some of the contamination, some of the particles will still fall into the container. Furthermore, the addition of a groove further complicates the machining of the connection pieces and also makes the assembly more expensive and timeconsuming.

### OBJECT OF THE INVENTION

The object of the present invention is hence to provide an alternative component assembly and method for connecting components, wherein the abovementioned disadvantages are avoided. This object is achieved by a component assembly as claimed in claim 1 and a method as claimed in claim 16.

### SUMMARY OF THE INVENTION

The present invention proposes a component assembly comprising a first component having a first connection face with a first connection profile and a second component having a second connection face with a second connection profile. According to an important aspect of the invention, the first and second connection profiles are designed so as to form a chamber between the first and second connection faces when the connection faces are in contact with each other; and setting material is arranged in the chamber, the setting material being able to set within the chamber.

When the two components have been assembled, i.e. when the two connection faces are in contact with each other, a chamber is formed between the connection faces. In order to secure the two components together, a setting material is introduced into the chamber and is allowed to set. Once the setting material has set, it forms a solid element in the chamber, which prohibits movement of the components in a direction parallel to the connection faces. The two components are securely connected to one another.

The present invention hence provides an additional option of joining two components. The assembly can e.g. be used for securely connecting a lid to a container of a fuel canister.

An important advantage of the present invention is that, unlike in other techniques, there is no need to form the connection profiles with great precision. Indeed, as long as there is a chamber between the first and second components that can be filled with setting material, the two components can be securely connected. If one of the connection profiles is misshaped, the size of the chamber will be change. The only repercussion this will have is that more or less setting material has to be introduced into the chamber. The strength of the connection is not compromised by a misshaped connection profile. There is hence no need to provide expensive tooling for the formation of the connection profiles.

Furthermore, as the components are not forcedly rubbed against each other, there is no risk that particles of the connection face come loose. A contamination of a fuel canister through such particles falling into the canister is therefore avoided.

The first and second connection profiles preferably extend over the whole circumference of the first and second connection faces. A stronger and more secure connection is thereby achieved. It is however not excluded to provide a number of individual connection points along the circumference of the connection faces.

The assembly preferably comprises at least one inlet port in communication with the chamber for introducing the setting material into the chamber. Once the components have been assembled, the setting material can e.g. be injected into the chamber by means of an existing injection moulding machine. A plurality of inlet ports can provide a faster or more even spreading of the setting material in the chamber.

The assembly can also comprise at least one vent port in communication with the chamber for evacuating air from the chamber when the latter is being filled with setting material, so that the chamber can be completely filled with setting material.

Advantageously, the first connection profile is formed by a first groove arranged in the first connection face. Such a groove can e.g. be provided at the time of manufacture of the first component. As already stated before, there is no need to ensure great precision of such a groove. A misshaped groove will not compromise the connection strength.

According to one embodiment of the invention, the second connection profile is formed by a second groove arranged in the second connection face, the first groove and the second groove cooperating to form the chamber. According to this embodiment, the chamber extends into the first component and into the second component. Once a setting material has been introduced in the chamber and has been allowed to set, movement of the two components with respect to each other in a direction parallel to the connection faces is prevented by a solid element, formed by the hardened setting material, extending into the first and the second components. Furthermore, the solid element can serve as seal between the connection faces.

The chamber can have a generally circular, elliptical or rectangular cross-section, any other shape being however equally possible. It will be appreciated that, when a rectangular cross-section is used, a larger sealing surface area is achieved between the two components, whereby a better sealing between the components is achieved.

According to another embodiment of the invention, the second connection profile is formed by a protrusion arranged on the second connection face, the protrusion engaging in the first groove. According to this embodiment, the first groove in the first connection face is of greater dimension than the protrusion of the second connection face, such that a chamber is formed between the protrusion and the walls of the first groove. During introduction of the setting material into the chamber, the setting material surrounds the protrusion. After setting of the setting material, the protrusion of the second component is securely maintained in the groove of the first component. Movement of the two components with respect to each other in a direction parallel to the connection faces is prevented by the hardened setting material located in the groove and surrounding the protrusion. Furthermore, the protrusion can have a generally T-shaped cross-section, by means of which, movement of the two components with respect to each other in a direction perpendicular to the connection faces is also prevented.

The first and second connection profiles can comprise one or more bores extending from the connection profile into the component. When the chamber is being filled with setting material, the latter also penetrates into the bores. The strength of the connection can thereby be improved. Furthermore, if such bores are in a direction not perpendicular to the connection faces, movement of the two components with respect to each other in a direction perpendicular to the connection faces can also prevented.

The bores can be in a direction substantially perpendicular to the connection faces of the components, and the bores then preferably comprise a narrowing in direction of the connection faces. The bores can e.g. be truncated bores. Such bores allow preventing movement of the connection element in a direction parallel and also perpendicular to the connection faces of the components.

The setting material can be a thermosetting, a thermoplastic or an adhesive material. When heated, such material can easily be injected or poured into the chamber and upon cooling, such material hardens and forms a solid element between the connection faces.

The first and/or the second component can be made from thermoplastic material. Advantageously, at least one of the first and second components, preferably however both, is made of the same thermoplastic material than the setting material. When the hot thermoplastic setting material, poured or injected into the chamber, comes into contact with the thermoplastic connection profile, the latter fuse together and form a strong bond. The setting material becomes inseparable from the connection face of the component. It will be appreciated that this also improves the seal between the first and second components.

The present invention also concerns a method for connecting components, the method comprising the steps of:
providing a first component having a first connection face with a first connection profile and a second component having a second connection face with a second connection profile; the first and second connection profiles being designed so as to form a chamber between the first and second contact faces when the contact faces are in contact with each other;
bringing the first and second connection faces into contact with each other;
filling the chamber with setting material; and
allowing the setting material to set.

A very simple method of connecting two components is provided. The first and second components are assembled such that the first and second connection faces come into contact with each other and form a chamber between the connection faces. In order to secure the components to one another, the chamber is then filled with setting material and the latter is allowed to set. Once the setting material has set or hardened, it forms a solid element within the chamber, which prevents the two components from moving with respect to each other in a direction parallel to the connection faces.

Preferably the setting material is poured or injected into the chamber via at least one inlet port. The setting material can e.g. be injected into the chamber by means of an existing injection moulding machine. It will be appreciated that a number of inlet ports can be provided for filling the chamber with setting material. A plurality of inlet ports can provide a faster or more even spreading of the setting material in the chamber.

The setting material can be a thermosetting, a thermoplastic or an adhesive material.

At least one of the components can be made from thermoplastic material.
Advantageously, at least one of the first and second components is made of the same thermoplastic material than the setting material.

### BRIEF DESCRIPTION OF THE DRAWINGS

The present invention will now be described in more detail, by way of example, with reference to the accompanying drawings, in which:
- FIG.1:: is a section view through a component assembly according to a first embodiment of the invention;
- FIG.2:: is a section view through a component assembly according to a second embodiment of the invention;
- FIG.3:: is a section view through a component assembly according to a third embodiment of the invention;
- FIG.4, 4a:: is a section view through a component assembly according to a fourth embodiment of the invention;
- FIG.5:: is a section view through a component assembly according to a fifth embodiment of the invention;
- FIG.6:: is a perspective view through a component assembly;
- FIG.7:: is a section view through a component assembly according to a sixth embodiment of the invention;
In the figures, same reference signs indicate similar or identical elements.

### DETAILED DESCRIPTION OF A PREFERRED EMBODIMENT

The present invention will be more apparent from the following description of a few not limiting embodiments of the invention.

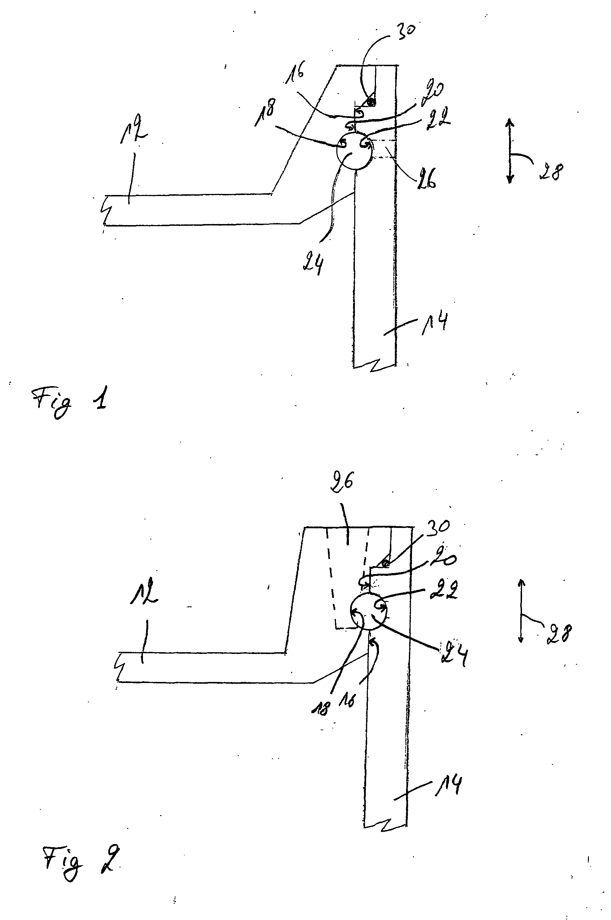

Fig.1 shows a section view through a connection portion of a component assembly of a first component 12 to a second component 14. Here, the second component 14 represents a container of a fuel canister and the first component 12 represents its lid. The first component 12 comprises a circumferential first connection face 16 with a first connection profile 18. The second component 14 comprises a second connection face 20 with a second connection profile 22. According to a first embodiment of the invention, the connection faces 16, 20 of both the first component 12 and the second component 14 comprise a groove having semi-circular cross-section, such that, when the first and second connection faces 16, 20 are in contact with one another as shown in Fig.1, the two connection profiles 18, 22 form a chamber 24 of circular cross-section. The chamber 24 comprises an inlet port 26 in the second component 14 through which setting material can be introduced into the chamber 24. Once set and hardened in the chamber 24, the setting material forms a solid element, i.e. a solid annular ring, inside the chamber 24. This solid element extends into the first component and into the second component, such that movement of the first component 12 with respect to the second component 14 is prohibited in a direction parallel to the connection faces 16, 20. In Fig.1, an arrow having reference numeral 28 represents this prohibited direction. The first component 12 is hence securely connected to the second component 14, in other words, the lid is securely connected to the container.

In case the first and second components 12, 14 are made from thermoplastic material, the setting material is preferably a thermoplastic material identical to the thermoplastic material of the first and second components 12, 14. Such thermoplastic material can be injected into the chamber 24 via one or more inlet ports 26, e.g. by means of an injection moulding machine. As the thermoplastic material comes into contact with the connection profiles 18, 22, it fuses to the latter, such that a very tight connection is formed between the setting material and the first and second components 12, 14. Furthermore, such a connection forms a very effective seal between the inside and the outside of the fuel canister. For additional sealing, an O-ring 30 can be arranged between the first and second components 12, 14.

According to a second embodiment of the invention, as shown in Fig.2, the inlet port 26 can be arranged in the first component 12. Instead of using an injection moulding machine to introduce the setting material into the chamber 24, a pouring technique can be used. One or more inlet ports 26 can e.g. be arranged in the first component 12 and have a funnel-like shape to facilitate the pouring of the setting material into the chamber 24. As the setting material is poured into the chamber 24 through a first inlet port 26, a second inlet port can serve as vent port for evacuating air from the chamber 24.

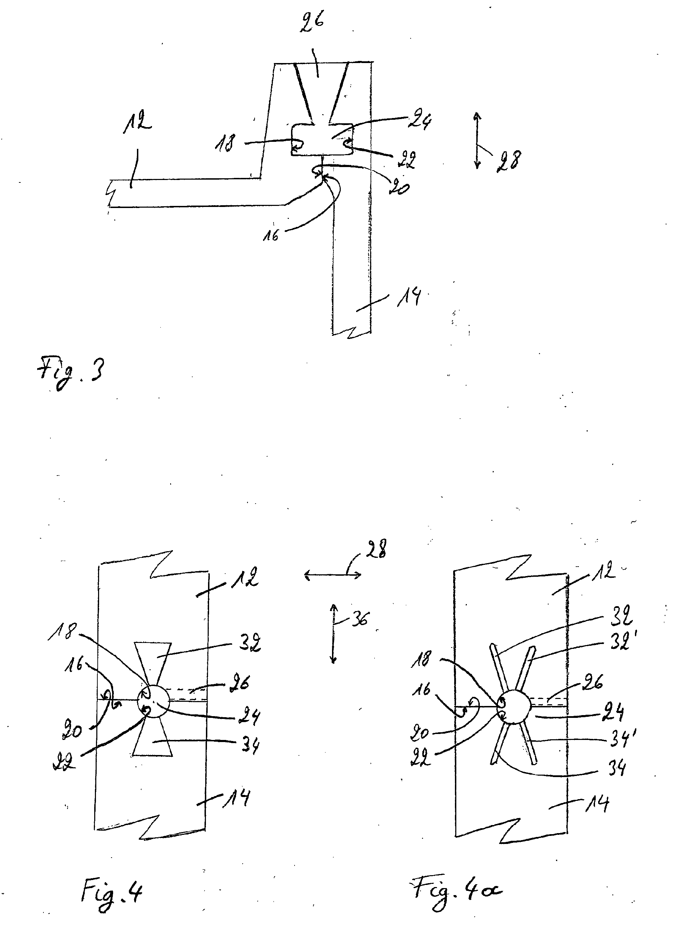

A third embodiment of the invention is shown in Fig.3, wherein the connection faces are formed so as to provide a chamber 24 of generally rectangular cross-section and a funnel-like inlet port 26. The wider base of the chamber 24 provides a larger sealing surface area. Instead of providing a certain number of inlet ports, this embodiment comprises a single circumferential inlet port 26.

The above embodiments all prevent a first component 12 from moving with respect to a second component 14, in a direction parallel to the connection faces 16, 20. The present invention however also provides means for preventing a first component from moving with respect to a second component, in a direction perpendicular to the connection faces of the two components, as described below.

A fourth embodiment of the invention is shown in Fig.4, wherein the first and second components 12, 14 have connection profiles 18, 22 each comprising one or more bores 32, 34, wherein the bores 32, 34 extend into the respective components 12, 14. The bores 32, 34 in Fig.4 are represented as truncated bores presenting a narrowing towards the respective connection faces 16, 20. Setting material is introduced into the chamber 24 and the bores 32, 34 via the inlet port 26. Once the setting material has set, it prevents movement of the components with respect to one another in a direction parallel to the connection faces 16, 20, as represented by arrow 28. Furthermore, due to the bores 32, 34, movement of the components 12, 14 with respect to one another in a direction perpendicular to the connection faces 16, 20, as represented by arrow 36, is also prevented.

Instead of providing truncated bores 32, 34 as shown in Fig.4, it is also possible to provide the connection profiles 18, 22 with cylindrical bores 32, 34, 32', 34', as shown in Fig.4a. When such bores 32, 34, 32', 34' are arranged at an angle, i.e. not perpendicular to the connection faces 16, 20, they prevent movement of the components 12, 14 with respect to one another in a direction perpendicular to the connection faces 16, 20. Such cylindrical bores 32, 34, 32', 34' are easy to produce, e.g. by drilling, from the connection face sides of the components 12, 14.

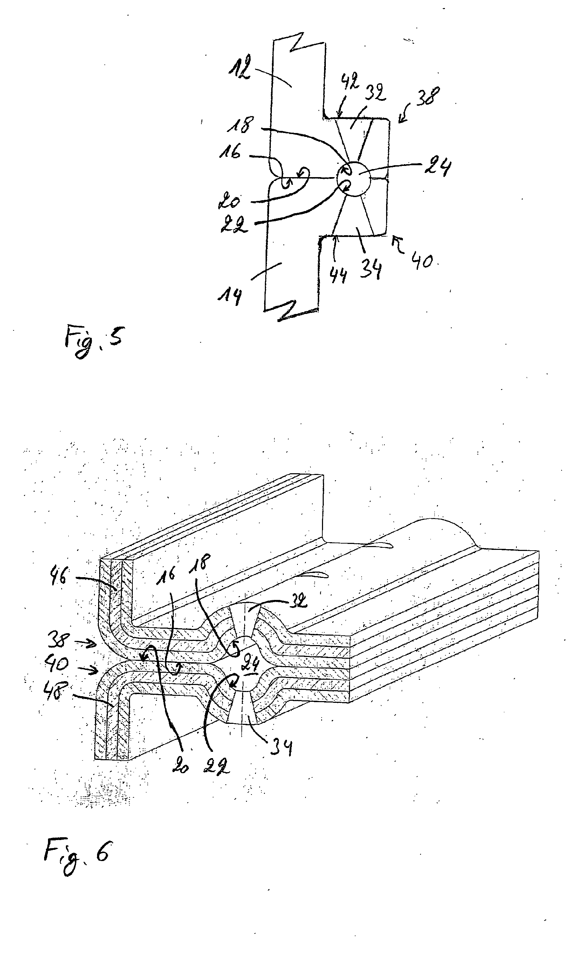

Fig.5 shows a fifth embodiment of the invention, wherein the first and second components 12, 14 each comprise a flange portion 38, 40 for extending the connection faces 16, 20. The chamber 24 and the bores 32, 34 are arranged in the flange portion and the bores 32, 34 extend to the external faces 42, 44 of the flanges 38, 40. The bores 32, 34 can thereby serve as inlet ports for the setting material, and also as vent ports. The bores 32, 34 are preferably arranged at regular intervals along the circumference of the components 12, 14 and the distance between neighbouring bores 32, 34 depends on the required holding force.

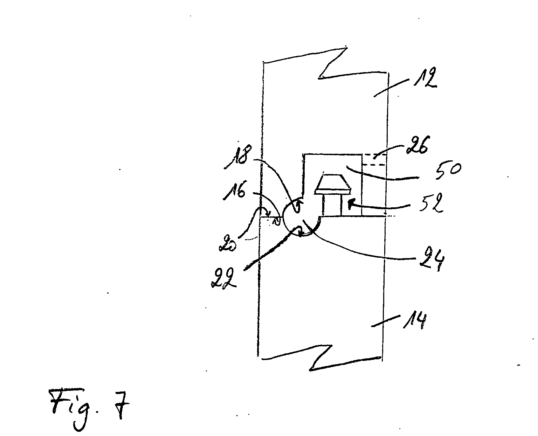

Fig.6 shows two connection wall portions of first and second components 12, 14, each comprising a barrier layer 46, 48 in the wall. Such barrier layers 46, 48 are often used in food or beverage containers, like e.g. ketch-up bottles, to prevent contamination of the food or beverage in the container. The ends of the two wall portions have been folded so as to provide flange portions 38, 40. In the flange portions 38, 40, each wall portion is folded so as form a chamber 24 between the connection faces 16, 20 of the components 12, 14. Truncated bores 32, 34 are provided in the flange portions 38, 40. An important aspect of this embodiment is that the barrier layers 46, 48 are not broken, apart from where the bores 32, 34 are located. Setting material is introduced into the chamber 24 and the bores 32, 34 and is allowed to set. The truncated bores 32, 34 ensure that the two wall portions are securely connected to one another. An unbroken barrier layer 46, 48 is present everywhere in the container so that the inside of the container is effectively protected from outside influences.

A sixth embodiment of the invention is shown in Fig.7. The first and second components 12, 14 have connection profiles 18, 22 configured such that a chamber 24 is arranged between the connection faces 16, 20. Furthermore, preferably at regular intervals, the first connection face 16 comprises additional chambers 50 and the second connection face 20 comprises protrusions 52 of generally T-shaped cross-section engaging in the additional chambers 50. Setting material is introduced into the chamber 24 and the additional chamber 50 via an inlet port 26. The protrusion 52 is surrounded by setting material and, once the setting material has set, the protrusion 52 is securely maintained in the additional chamber 50. The protrusions 52 and additional chambers 50 are preferably arranged at regular intervals along the circumference of the components 12, 14 and the distance between neighbouring protrusions 52 and additional chambers 50 depends on the required holding force.

It will be appreciated that, although the above description only mentions the connection of two components, more than two components can be connected together by the method according to the invention.

## Claims

1. Component assembly comprising:
- a first component (12) having a first connection face (16) with a first connection profile (18);
- a second component (14) having a second connection face (20) with a second connection profile (22);
**characterised in that**
- said first and second connection profiles (18, 22) are designed so as to form a chamber (24, 50) between said first and second connection faces (16, 20) when said connection faces (16, 20) are in contact with each other,
- setting material is arranged in said chamber (24, 50), said setting material being able to set into a solid element within said chamber (24, 50).

2. Assembly according to claim 1, wherein said first and second connection profiles (18, 22) extend over the whole circumference of said first and second connection faces (16, 20).

3. Assembly according to claim 1 or 2, comprising at least one inlet port (26) in communication with said chamber (24, 50) for introducing said setting material into said chamber (24, 50).

4. Assembly according to any of the previous claims, comprising at least one vent port in communication with said chamber (24, 50) for evacuating air from said chamber (24, 50) when the latter is being filled with setting material.

5. Assembly according to any of the previous claims, wherein said first connection profile (18) is formed by a first groove arranged in said first connection face (16).

6. Assembly according to claim 5, wherein said second connection profile (22) is formed by a second groove arranged in said second connection face (20), said first groove and said second groove cooperating to form said chamber (24, 50).

7. Assembly according to claim 6, wherein said chamber (24, 50) has a generally circular, elliptical or rectangular cross-section.

8. Assembly according to claim 5 or 6, wherein said second connection profile (22) is formed by a protrusion (52) arranged on said second connection face (20), said protrusion (52) engaging in said first groove.

9. Assembly according to claim 8, wherein said protrusion (52) has a generally T-shaped cross-section.

10. Assembly according to any of the previous claims, wherein said first and/or second connection profiles (18, 22) comprise one or more bores (32, 34) extending from said connection profile into said component.

11. Assembly according to claim 10, wherein said bores (32, 34) are in a direction substantially perpendicular to the connection faces (16, 20) of the components (12, 14) and wherein said bores (32, 34) comprise a narrowing in direction of said connection faces (16, 20).

12. Assembly according to claim 11, wherein said bores (32, 34) are truncated bores.

13. Assembly according to any of the previous claims, wherein said setting material is a thermosetting, a thermoplastic or an adhesive material.

14. Assembly according to any of the previous claims, wherein said first and/or said second component (12, 14) is made from thermoplastic material.

15. Assembly according to claim 13 and 14, wherein at least one of said first and second components (12, 14) is made of the same thermoplastic material than said setting material.

16. Method for connecting components, said method comprising the steps of:
- providing a first component (12) having a first connection face (16) with a first connection profile (18) and a second component (14) having a second connection face (20) with a second connection profile (22); said first and second connection profiles (18, 22) are designed so as to form a chamber (24, 50) between said first and second connection faces (16, 20) when said connection faces (16, 20) are in contact with each other;
- bringing said first and second connection faces (16, 20) into contact with each other;
- filling said chamber (24, 50) with setting material; and
- allowing said setting material to set.

17. Method according to claim 16, wherein said setting material is poured into said chamber (24, 50) via at least one inlet port (26).

18. Method according to claim 16, wherein said setting material is injected into said chamber (24, 50) via at least one inlet port (26).

19. Method according to any of claims 16 to 18, wherein said setting material is a thermosetting, a thermoplastic or an adhesive material.

20. Method according to any of claims 16 to 19, wherein at least one of said components (12, 14) is made from plastic material.

21. Method according to claim 19 or 20, wherein at least one of said first and second components (12, 14) is made of the same thermoplastic material than said setting material.
